# EUROPÄISCHE PATENTSCHRIFT

(11) **EP 0 805 253 B1**
(45) Veröffentlichungstag und Bekanntmachung des Hinweises auf die Patenterteilung: **06.03.2002**
(21) Anmeldenummer: 97106996.8
(22) Anmeldetag: 28.04.1997
(51) Int. Cl.: E05F 15/10, H02K 11/00

(54) **Antriebsvorrichtung für den Flügel eines Fensters, einer Tür oder dergleichen**
Actuating device for wings of windows, doors or similar
Dispositif d'actionnement pour panneaux de fenêtres, portes ou similaires

(30) Priorität: 29.04.1996 DE 19617083
(43) Veröffentlichungstag der Anmeldung: 05.11.1997
(73) Patentinhaber: GEZE GmbH, 71229 Leonberg (DE)
(72) Erfinder: Reuff, Theo, 71065 Sindelfingen (DE); Rothenburg, Jens, 71263 Weil der Stadt (DE)

(56) Entgegenhaltungen:
- DE-A- 3 726 123
- DE-A- 4 212 473
- DE-A- 19 547 965

## Beschreibung

Die Erfindung betrifft eine Antriebsvorrichtung für den Flügel eines Fensters, einer Tür oder dergleichen sowie ein Verfahren zum Antreiben eines Flügels eines Fensters, einer Tür oder dergleichen.

Aus der gattungsbildenden DE 42 14 473 A1 ist eine Antriebsvorrichtung für den Flügel eines Fensters oder dergleichen bekannt, welche einen in einem Antriebsgehäuse aufgenommenen Niederspannungs-Gleichstrommotor aufweist. Derartige Antriebe im Tür- und Fensterbereich werden in der Regel über das Wechselstromnetz versorgt Um die Drehrichtung des Antriebsmotors einzustellen, weist die Antriebsvorrichtung eine Beschaltungseinrichtung zum Polaritätstausch auf. Da die Betriebsspannung des Niederspannungs-Gleichstrommotors unterhalb der Netzspannung liegt, ist zum Herabsetzten der Netzspannung ein Transformator erforderlich. Nachteilig bei der Anordnung dieses herkömmlichen Transformators im Antriebsgehäuse ist dessen Größe, welche überwiegend durch die Dimensionierung der Erregerspulen bedingt ist Ein derartig großes Antriebsgehäuse kann neben dem optischen Nachteil auch ein Montagehindemis darstellen. In den meisten Anwendungsfällen besteht daher das Bestreben, die Baugröße der Antriebsvorrichtung bei gleicher oder gar verbesserter Leistung zu reduzieren.

Für die Helligkeitssteuerung von Halogenlampen sind sogenannte elektronische Transformatoren entwickelt worden, die sehr kompakte Abmessungen aufweisen. Derartige elektronische Transformatoren, wie z.B. in der DE 37 36 222 C2 bzw. der DE 44 03 707 A1 beschrieben, sind seit einigen Jahren erhältlich. Ein solcher "elektronischer Transformator" enthält im wesentlichen die folgenden Baugruppen: eine erste Baugruppe in der Form eines Doppelweggleichrichters, der bei einer üblichen Netzwechselspannung von z.B. 230 V und 50 Hz an seinem Ausgang eine Spannung von z.B. 230 V und 100 Hz abgibt. Ein selbstschwingender Oszillator bildet eine zweite Baugruppe, der in Abhängigkeit von dem Hersteller des elektronischen Transformators üblicherweise bei einer Frequenz von ca. 40 kHz schwingt. Es liegt dann eine Wechselspannung von ca. 230 V mit einer Frequenz von 40 kHz vor, die mit 100 Hz moduliert ist. Eine dritte Baugruppe umfasst einen üblichen Transformator. Wegen der hochfrequenten Eingangsspannung braucht dieser im Verhältnis zu 50 Hz-Transformatoren nur sehr klein zu sein und liefert bei sehr hohem Wirkungsgrad eine relativ große Leistung. An dem Ausgang des Transformators liegt zum Beispiel eine Wechselspannung von 24 V und 40 kHz vor, die mit 100 Hz moduliert ist, welche im Anschluss über eine geeignete Beschaltung nochmals gleichgerichtet und geglättet wird.

Aufgabe der Erfindung ist es, eine Antriebsvorrichtung für den Flügel eines Fensters, einer Tür oder dergleichen zu schaffen, die sich gegenüber bisherigen Ausführungen durch eine geringere Baugröße auszeichnet.

Die Aufgabe wird erfindungsgemäß durch den Einsatz eines elektronischen Transformators in einem derartigen Antrieb gelöst.

Die Beschaltungseinrichtung ist so ausgebildet, dass der Antrieb an herkömmliche Steuerleitungen mit netzfrequenter Wechselspannung anschließbar ist. Die Beschaltungseinrichtung weist hierzu ein erstes Relais mit einem Schaltkontakt auf, welcher jeweils die stromführende Steuerleitung auf den elektronischen Transformator durchschaltet. Innerhalb des elektronischen Transformators ist eine Takteinrichtung angeordnet, welche die netzfrequente Eingangsspannung in eine hochfrequente Spannung umwandelt. Der diese hochfrequente Spannung in Niederspannung umwandelnde Transformator ist gegenüber einem Niederfrequenztransformator wesentlich kleiner ausgebildet. Sekundärseitig ist an den Transformator ein Gleichrichter angeschlossen, welcher die Sekundärspannung des Transformators gleichrichtet. Die Takteinrichtung, der Hochfrequenztransformator sowie der Gleichrichter bilden den elektronischen Transformator, wobei die genannten Komponenten auf einer gemeinsamen Basisplatine angeordnet sind. Durch diese Anordnung wird ebenfalls optimale Kompaktheit erreicht.

Die ausgangsseitige Gleichspannung, welche von ihrem Betrag schon der Betriebsspannung des Antriebsmotors entspricht, wird dem Antriebsmotor über ein zwischengeschaltetes zweites Relais mit zwei Schaltkontakten zugeführt. Dieses zweite Relais polt die Versorgungsspannung des Antriebsmotors abhängig vom Anliegen der Eingangsspannung an der ersten oder der zweiten Steuerleitung um.

Die Erfindung wird in den Figuren näher erläutert. Dabei zeigt:
- Figur 1: eine schematische Seitenansicht eines Klappfensters mit einem erfindungsgemäßen Schubstangenantrieb;
- Figur 2: einen Schnitt parallel zur Bildebene in Figur 1 mit einem Längsschnitt des Antriebsgehäuses;
- Figur 3: einen Ausschnitt in Figur 2 mit der Darstellung der Basisplatine;
- Figur 4: ein vereinfachtes Blockschaltbild der Motorsteuerung auf der Basisplatine.

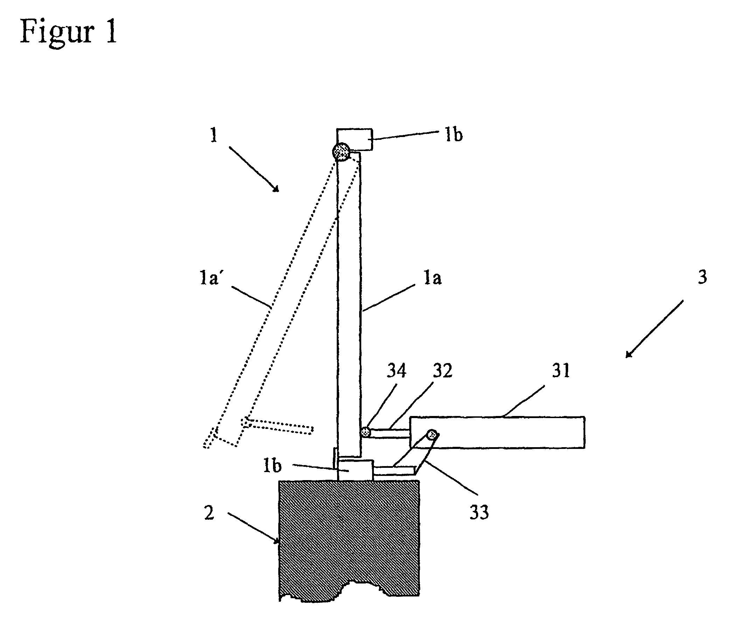

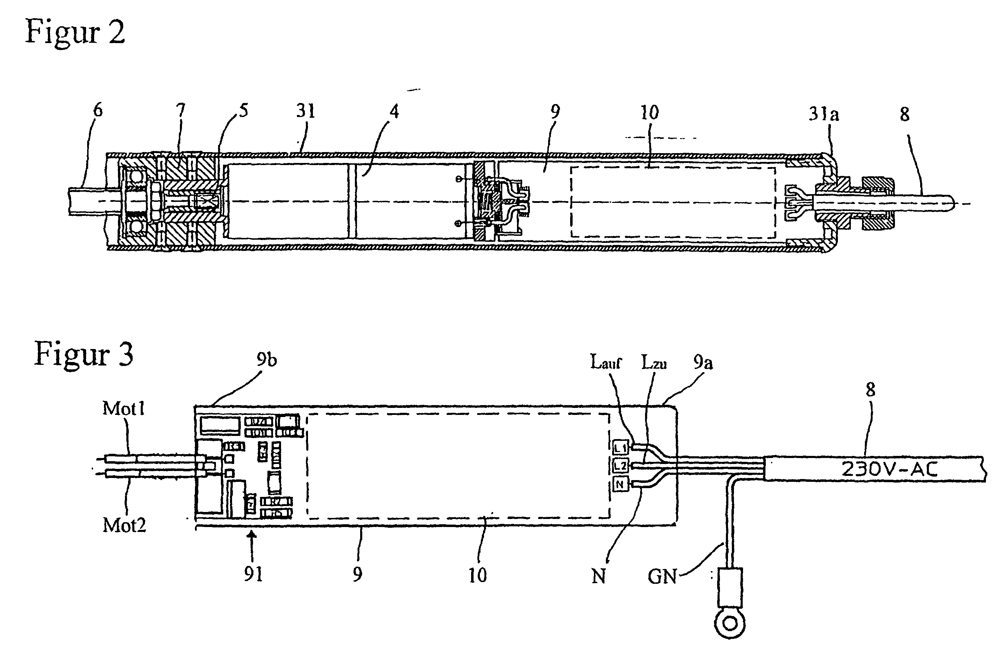

Das Ausführungsbeispiel in Figur 1 zeigt ein Kippfenster 1 in geschlossener Position, bei dem der Klappflügel 1a mit einem elektrischen Antrieb 3 ausgestattet ist. In gestrichelten Linien dargestellt ist die Position des Flügels 1a' bei geöffnetem Fenster 1. Der elektrische Antrieb 3 weist ein rohrförmiges Antriebsgehäuse 31 auf, in dem ein Elektromotor 4 (Fig. 2) mit einer aus dem Gehäuse 31 ragenden linear ein- und ausfahrbaren Motorschubstange 32 gelagert ist. Das Antriebsgehäuse 31 ist über eine Halterung 33 am Blendrahmen 1b, bzw. an der Mauer 2 gelenkig gelagert. Die Motorschubstange 32 ist am Flügel 1a über ein Drehgelenk 34 befestigt. Die Zuleitungen zur elektrischen Versorgung und Steuerung des Motors 4 werden dem Antriebsgehäuse 31 von außen her zugeführt (ohne Darstellung).

Bei dem Antrieb 3 handelt es sich um einen herkömmlichen Spindelmotor, dessen Aufbau in der Schnittdarstellung in Figur 2 zu erkennen ist. Die Abtriebswelle 5 des Elektromotors 4 ist mit einer in dem Antriebsgehäuse 31 drehbar, aber axial unverschieblich gelagerten Spindel 6 drehfest gekoppelt. In Figur 2 nicht dargestellt ist die auf der Spindel 6 axial verschiebbar und dabei im Antriebsgehäuse 31 undrehbar geführte Spindelmutter, welche mit der als Rohr ausgebildeten Motorschubstange 32 starr verbunden ist. Der Elektromotor 4 ist in dem dargestellten Ausführungsbeispiel als Niederspannungs-Gleichstrommotor mit einer Betriebsspannung von 24V ausgeführt. Er ist über eine Rutschkupplung 7 in dem Antriebsgehäuse 31 gelagert. Über das Stirnende 31a des Antriebsgehäuses 31 wird von außen das elektrische Anschlußkabel 8 zugeführt und auf der Basisplatine 9 angeschlossen. Die Basisplatine 9 nimmt im Antriebsgehäuse den rückwärtigen Raum zwischen Motor 4 und Stirnende 31a ein. Auf ihr befindet sich die elektrische Beschaltung und der mit gestrichelten Umrissen eingezeichnete elektronische Transformator 10.

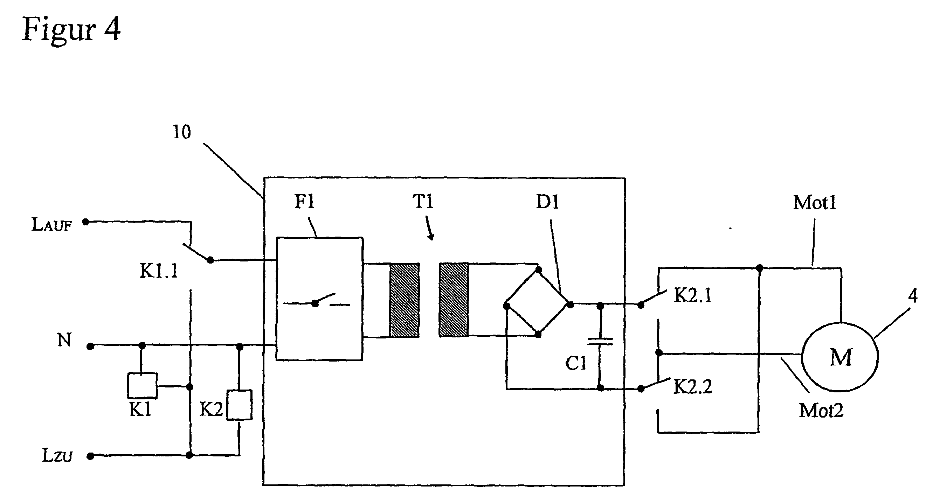

Die Basisplatine 9 ist in Figur 3 nochmals vergrößert dargestellt. Die über das Anschlußkabel 8 zugeführten Leitungen L_{AUF}, L_{ZU} und N sind am stirnseitigen Platinenende 9a angeschlossen. Der Masseanschluß GN ist am Antriebsgehäuse 31 befestigt. Weitere elektrische Bauelemente 91 sowie die Versorgungsanschlüsse Mot1 und Mot2 für den Elektromotor 4 befinden sich am motorseitigen Platinenende 9b. Den größten Teil der Basisplatine 9 nimmt die gestrichelt eingezeichnete Baugruppe des elektronischen Transformators 10 ein. Ein vereinfachtes Blockschaltbild der elektrischen Beschaltung auf der Basisplatine 9 ist in Figur 4 dargestellt.

Vorteilhaft an der Integration des Transformators 10 und der elektrischen Beschaltung 91 im Antriebsgehäuse 31 ist, daß die Steuereinrichtungen und Zuleitungen, welche für die Ansteuerung von herkömmlichen Fensterantrieben mit Wechselstrommotor eingesetzt werden, auch für die neuartigen Antriebe mit elektronischen Transformator und Gleichstrommotor verwendet werden können. Eine Umrüstung auf die neuartigen Antriebe ist durch den einfachen Austausch des kompletten Antriebsgehäuses 31 möglich.

Figur 4 zeigt ein vereinfachtes Blockschaltbild der elektrischen Beschaltung auf der Basisplatine 9. Es werden die drei Leitungen LAUF, Lzu und N zugeführt, wobei an der Leitung LAUF dann gegenüber der Leitung N eine Wechselspannung anliegt, wenn der Motor 4 zum Öffnen des Flügels 1a angesteuert wird und an der Leitung L_{ZU} wenn er zum Schließen des Flügels 1a' angesteuert wird. Die Leitung N wird direkt dem elektronischen Transformator 10 zugeführt. Zwischen den Leitungen N und L_{ZU} sind zwei Relais K1 und K2 parallel geschaltet. Das Relais K1 betätigt bei Anliegen einer Spannung an Lzu den Schaltkontakt K1.1 und schaltet dadurch L_{AUF} frei und schließt den Strompfad von Lzu zum elektronischen Transformator 10. Im umgekehrten Fall, bei Anliegen einer Spannung an L_{AUF}, führt der Strompfad über Schaltkontakt K1.1 direkt zum elektronischen Transformator 10. Durch diese Beschaltung wird sichergestellt, daß jeweils die stromführende Leitung L_{AUF}, bzw. L_{ZU} zum elektronischen Transformator 10 durchgeschaltet wird. Im elektronischen Transformator 10 wird die Spannung zunächst einer Takteinrichtung F1 zugeführt Diese enthält als Hauptkomponenten einen Doppelweggleichrichter und einen selbstschwingenden Oszillator zur Frequenzerhöhung (ohne Darstellung). Im Anschluß wird über den Transformator T1 die hochfrequente Wechselspannung heruntertransformiert, einem Brückengleichrichter D1 zugeführt, dort gleichgerichtet und über einen parallelgeschalteten Kondensator C1 geglättet. Vom elektronischen Transformator 10 aus führen zwei Strompfade zu den beiden Schaltkontakten K2.1 und K2.2. Bei stromlosem Relais K2 liegen diese auf den beiden zum Elektromotor 4 führenden Versorgungsleitungen Mot1, bzw. Mot2. Bei Anliegen einer Spannung an L_{ZU} und an K2 werden beide Schaltkontakte K2.1 und K2.2 geschlossen, woraufhin die Polarität der an den Versorgungsleitungen Mot1 und Mot2 liegenden Spannung vertauscht wird. Bei Anliegen einer Spannung an L_{ZU} macht diese Beschaltung den durch Schaltkontakt K1.1 eingangsseitig verursachten Polaritätstausch rückgängig. Auf diese Weise wird sichergestellt, daß bei einem Signal an L_{AUF} der Motor 4 in Öffnungsrichtung und bei einem Signal an L_{ZU} in Schließrichtung betrieben wird.

### Liste der Referenzzeichen

- 1: Fenster
- 1a: Flügel (geschlossen)
- 1a': Flügel (geöffnet)
- 1b: Blendrahmen
- 2: Mauer
- 3: Antrieb
- 31: Antriebsgehäuse (Stirnende 31a)
- 32: Motorschubstange
- 33: Halterung
- 34: Drehgelenk
- 4: Elektromotor
- 5: Abtriebswelle
- 6: Spindel
- 7: Rutschkupplung
- 8: Anschlußkabel
- 9: Basisplatine (Stirnende 9a, Motorseite 9b)
- 91: Bauelemente
- 10: elektronischer Transformator
- C1: Kondensator
- D1: Brückengleichrichter
- F1: Takteinrichtung
- K1: Relais 1 für Schaltkontakt K1.1
- K2: Relais 2 für Schaltkontakt K2.1 und K2.2
- T1: Transformator
- N: Nulleiter
- L_{AUF}: Phase AUF Netz
- L_{ZU}: Phase ZU Netz
- GN: Schutzleiter
- Mot1,2: Gleichspannung 24V

## Patentansprüche

1. Antriebsvorrichtung für den Flügel (1a) eines Fensters (1), einer Tür oder dergleichen,
mit einem im Antriebsgehäuse (31) aufgenommenen Motor (4), welcher über einen Transformator (10) versorgt wird,
wobei die Antriebsvorrichtung eine Beschaltungseinrichtung (K1, K1.1, K2, K2.1, K2.2) zum Polaritätstausch aufweist, die mit dem Transformator (10) verbunden ist,
**dadurch gekennzeichnet,**
**dass** es sich bei dem Transformator um einen elektronischen Transformator (10) handelt.

2. Antriebsvorrichtung nach Anspruch 1,
**dadurch gekennzeichnet, dass** der elektronische Transformator (10) eine Takteinrichtung (F1) und/oder eine frequenzverändernde Einrichtung aufweist.

3. Antriebsvorrichtung nach Anspruch 1 oder 2,
**dadurch gekennzeichnet, dass** die Beschaltungseinrichtung (K1, K1.1, K2, K2.1, K2.2) so ausgebildet ist, dass der Antrieb (3) an herkömmliche Steuerleitungen (L_{auf}, L_{zu}, N) mit Netzwechselspannung anschließbar ist.

4. Antriebsvorrichtung nach einem der Ansprüche 1 bis 3,
**dadurch gekennzeichnet, dass** die Beschaltungseinrichtung ein erstes Relais (K1) mit einem Schaltkontakt (K1.1) aufweist, welcher jeweils die stromführende Steuerleitung (L_{AUF}, L_{ZU}) auf den elektronischen Transformator (10) durchschaltet.

5. Antriebsvorrichtung nach einem der Ansprüche 1 bis 4,
**dadurch gekennzeichnet, dass** die Beschaltungseinrichtung ein zweites Relais (K2) mit zwei Schaltkontakten (K2.1, K2.2) aufweist, welche auf der Ausgangsseite des elektronischen Transformators (10) einen auf der Eingangsseite durchgeführten Polaritätstausch reversieren.

6. Antriebsvorrichtung nach einem der Ansprüche 1 bis 5,
**dadurch gekennzeichnet, dass** der Motor (4) als Gleichstrommotor ausgebildet ist.

7. Antriebsvorrichtung nach einem der Ansprüche 1 bis 6,
**dadurch gekennzeichnet, dass** zwischen dem Transformator (T1) und dem Motor (4) ein Gleichrichter (D1) geschaltet ist und/oder der Transformator (T1) mit einem Gleichrichter als Baugruppe ausgebildet ist, vorzugsweise auf einer gemeinsamen Platine (9) angeordnet ist.

8. Verfahren zum Antreiben eines Flügels (1a) eines Fensters (1), einer Tür oder dergleichen, unter Verwendung einer Antriebseinrichtung (3), die einen Transformator (10) der einen Motor versorgt, und eine Beschaltungseinrichtung (K1, K1.1, K2, K2.1, K2.2) zur Polarisationsumkehr umfasst, wobei die Beschaltungseinrichtung (K1, K1.1, K2, K2.1, K2.2) mit dem Transformator (10) verbunden wird, **dadurch gekennzeichnet, dass** es sich bei dem Transformator um einen elektronischen Transformator (10) handelt.

9. Verfahren nach Anspruch 8,
**dadurch gekennzeichnet, dass** der elektronische Transformator (10) auf einer Basisplatine (9) angeordnet wird.

10. Verfahren nach Anspruch 8 oder 9,
**dadurch gekennzeichnet, dass** der elektronische Transformator (10) im Antriebsgehäuse (31) angeordnet wird.

## Claims

1. A drive apparatus for the leaf (1a) of a window (1), of a door or the like,
comprising a motor (4) which is accommodated in the drive housing (31) and which is supplied via a transformer (10),
wherein the drive apparatus has a circuit device (K1, K1.1, K2, K2.1, K2.2) for an exchange of polarity which is connected to the transformer (10),
**characterised in that** the transformer is an electronic transformer (10).

2. A drive apparatus in accordance with claim 1, **characterised in that** the electronic transformer (10) has a cycle device (F1) and/or a frequency-changing device.

3. A drive apparatus in accordance with claim 1 or claim 2, **characterised in that** the circuit device (K1, K1.1, K2, K2.1, K2.2) is designed such that the drive (3) can be connected to conventional control leads (L_{auf}, L_{zu}, N) with line AC voltage.

4. A drive apparatus in accordance with any one of claims 1 to 3, **characterised in that** the circuit device has a first relay (K) with a switch contact (K1.1) which in each case switches the current conducting control lead (L_{AUF}. L_{ZU}) through to the electronic transformer (10).

5. A drive apparatus in accordance with any of claims 1 to 4, **characterised in that** the circuit device has a second relay (K2) with two switch contacts (K2.1, K2.2), which reverse a polarity exchange effected at the input side at the output side of the electronic transformer (10).

6. A drive apparatus in accordance with any of claims 1 to 5, **characterised in that** the motor (4) is designed as a DC motor.

7. A drive apparatus in accordance with any of claims 1 to 6, **characterised in that** a rectifier (D1) is interposed between the transformer (T1) and the motor (4) and/or the transformer (T1) is formed with a rectifier as a module, is preferably arranged on a common circuit board (9).

8. A method for driving a leaf (1a) of a window (1), of a door or the like using a drive apparatus (3) which includes a transformer (10) which supplies a motor and a circuit device (K1, K1.1, K2, K2.1, K2.2) for the reversal of polarisation, with the circuit device (K1, K1.1, K2, K2.1, K2.2) being connected to the transformer (10), **characterised in that** the transformer is an electronic transformer (10).

9. A method in accordance with claim 8, **characterised in that** the electronic transformer (10) is arranged on a base circuit board (9).

10. A method in accordance with claim 8 or claim 9, **characterised in that** the electronic transformer (10) is arranged in the drive housing (31).

## Revendications

1. Dispositif d'entraînement pour le battant (la) d'une fenêtre (1), d'une porte ou analogue,
comportant un moteur (4) qui est logé dans le carter (31) du mécanisme d'entraînement et qui est alimenté par l'intermédiaire d'un transformateur (10),
dans lequel le ' dispositif d'entraînement présente, pour l'échange de polarité, un agencement de circuit (K1, K1.1, K2, K2.1, K2.2) qui est relié au transformateur (10),
**caractérisé par le fait,**
**qu'**en ce qui concerne le transformateur il s'agit d'un transformateur électronique (10).

2. Dispositif d'entraînement selon la revendication 1,
**caractérisé par le fait que** le transformateur électronique (10) présente un organe donnant un signal d'horloge (F1) et/ou un organe modifiant la fréquence.

3. Dispositif d'entraînement selon la revendication 1 ou 2,
**caractérisé par le fait que** l'agencement de circuit (K1, K1.1, K2, K2.1, K2.2) est conçu de façon que le mécanisme d'entraînement (3) puisse être relié à la tension alternative du réseau par des conducteurs de commande traditionnels (Louv, Lfer, N).

4. Dispositif d'entraînement selon l'une des revendications 1 à 3,
**caractérisé par le fait que** l'agencement de circuit présente un premier relais (K1) avec un contact de commutation (K1.1) qui permet au conducteur de commande (Louv, Lfer), sur lequel passe le courant, de se raccorder au transformateur électronique (10).

5. Dispositif d'entraînement selon l'une des revendications 1 à 4,
**caractérisé par le fait que** l'agencement de circuit présente un second relais (K2) avec deux contacts de commutation (K2.1, K2.2) qui, du côté sortie du transformateur électronique (10), inversent un échange de polarité effectué du côté entrée.

6. Dispositif d'entraînement selon l'une des revendications 1 à 5,
**caractérisé par le fait que** le moteur (4) est conçu sous forme de moteur à courant continu.

7. Dispositif d'entraînement selon l'une des revendications 1 à 6,
**caractérisé par le fait qu'**entre le transformateur (T1) et le moteur (4) est monté un redresseur (D1) et/ou que le transformateur (T1) forme avec le redresseur un groupe, disposé de préférence sur une platine commune (9).

8. Procédé pour l'entraînement d'un battant (la) d'une fenêtre (1), d'une porte ou analogue, avec emploi d'un dispositif d'entraînement (3) qui comporte un transformateur (10) qui alimente un moteur et un agencement de circuit (K1, K1.1, K2, K2.1, K2.2) pour inverser la polarité, dans lequel l'agencement de circuit (K1, K1.1, K2, K2.1, K2.2) est relié au transformateur (10), **caractérisé par le fait qu'**en ce qui concerne le transformateur il s'agit d'un transformateur électronique (10).

9. Procédé selon la revendication 8,
**caractérisé par le fait que** le transformateur électronique (10). est disposé sur une platine de base (9).

10. Procédé selon la revendication 8 ou 9,
**caractérisé par le fait que** le transformateur électronique (10) est disposé dans le carter (31) du mécanisme d'entraînement.
